# EUROPEAN PATENT APPLICATION

(11) **EP 4 772 744 A1**
(43) Date of publication of application: **08.07.2026**
(21) Application number: 24954190.5
(22) Date of filing: 14.10.2024
(51) Int. Cl.: F04B 37/12, F04B 25/00, F04B 39/10, F04B 39/12

(54) **OIL-FREE AIR COMPRESSOR AND VEHICLE**

(30) Priority: 12.09.2024 CN 202411273143
(71) Applicant: Zhejiang Ruili Air Compressor Equipment Co., Ltd, Wenzhou, Zhejiang 325200 (CN)
(72) Inventor: ZHU, Bin, Wenzhou, Zhejiang 325200 (CN); LI, Chuanwu, Wenzhou, Zhejiang 325200 (CN); CAI, Qimi, Wenzhou, Zhejiang 325200 (CN); ZHOU, Shengbo, Wenzhou, Zhejiang 325200 (CN); ZHONG, Zhoule, Wenzhou, Zhejiang 325200 (CN)
(74) Representative: RCF - Protecting Innovation, S.A.
(86) International application number: PCT/CN2024/124739
(87) International publication number: WO 2026/056043

(57) **Abstract**

The present invention relates to an oil-free air compressor. An oil-free air compressor, comprising a cylinder body (1), which is internally provided with a primary compression chamber (4), a primary exhaust chamber (5) and a high-pressure chamber (8); wherein the primary compression chamber (4) and the primary exhaust chamber (5) are coaxially arranged and are respectively parallel to the axis of the high-pressure chamber (8); the sum of the axial length of the primary compression chamber (4) and the axial length of the primary exhaust chamber (5) is less than the axial length of the high-pressure chamber (8). The present invention solves the technical problem existing in the prior art: how to shorten the axial stroke of the low-pressure piston assembly.

## Description

### Technical Field

The present invention relates to the technical field of new energy vehicles, and specifically relates to an oil-free air compressor and a vehicle.

### Background Art

Piston-type oil-free air compressors are used for air compression in new energy vehicles. Reference document CN201822042980.8 discloses the structure of an electrically driven oil-free air compressor used in new energy vehicles. This oil-free air compressor comprises a cylinder body, which is internally provided with a low-pressure chamber. A low-pressure piston assembly is arranged within the low-pressure chamber. The low-pressure piston assembly moves reciprocally inside the low-pressure chamber, thereby compressing the air entering the low-pressure chamber.

Usually, the axial stroke of the low-pressure piston assembly inside the low-pressure chamber directly affects the surface treatment area of the inner wall of the low-pressure chamber, thereby affecting the processing cost of the piston cylinder.

Specifically, in the prior art, the low-pressure piston assembly needs to move from the lowest point of the low-pressure chamber to the highest point of the low-pressure chamber to complete one air compression process. That is, the axial stroke of the low-pressure piston assembly inside the low-pressure chamber is equal to the axial length of the low-pressure chamber. This leads to, under the condition that the diameter of the low-pressure chamber is determined, the length of the low-pressure chamber that contacts and slides with the low-pressure piston assembly being the entire axial length of the low-pressure chamber. If the diameter of the low-pressure chamber is D and the entire axial length of the low-pressure chamber is L, then the area of the inner wall of the low-pressure chamber that needs surface treatment equals πDL. The surface treatment refers to using specific process so as to improve the wear resistance, temperature resistance, corrosion resistance of that part of the inner wall of the low-pressure chamber, and to reduce the friction coefficient. Therefore, the larger the surface treatment area of the inner wall of the low-pressure chamber, the higher the processing cost of the piston cylinder.

In summary, in order to reduce the processing cost of the piston cylinder, the surface treatment area of the inner wall of the low-pressure chamber needs to be reduced. Ultimately, the axial stroke of the low-pressure piston assembly inside the low-pressure chamber needs to be reduced.

Therefore, the technical problem existing in the prior art is how to shorten the axial stroke of the low-pressure piston assembly.

### SUMMARY

In view of the technical problem in the prior art of how to shorten the axial stroke of the low-pressure piston assembly, the present invention provides an oil-free air compressor and a vehicle.

The present invention is achieved through the following technical solution:
An oil-free air compressor, comprising a cylinder body, which is internally provided with a primary compression chamber, a primary exhaust chamber and a high-pressure chamber;
wherein the primary compression chamber and the primary exhaust chamber are coaxially arranged and are respectively parallel to the axis of the high-pressure chamber; the sum of the axial length of the primary compression chamber and the axial length of the primary exhaust chamber is less than the axial length of the high-pressure chamber;
further comprising a first valve plate assembly, which is arranged between the primary compression chamber and the primary exhaust chamber; the first valve plate assembly is provided with a first check valve body, which is used to allow unidirectional flow from the primary compression chamber to the primary exhaust chamber;
further comprising a box body, which is located below the cylinder body and is connected to the cylinder body;
further comprising a crankshaft assembly, a low-pressure connecting rod and a low-pressure piston assembly; the crankshaft assembly is arranged inside the box body, and the primary compression chamber is located between the primary exhaust chamber and the crankshaft assembly; the low-pressure piston assembly is movably arranged inside the primary compression chamber and is connected to the crankshaft assembly through the low-pressure connecting rod;
further comprising a high-pressure connecting rod and a high-pressure piston assembly; the high-pressure piston assembly is movably arranged inside the high-pressure chamber and is connected to the crankshaft assembly through the high-pressure connecting rod;
the direction from the primary compression chamber pointing to the primary exhaust chamber is defined as upward, and the opposite direction is defined as downward, along the axial direction of the primary compression chamber and the primary exhaust chamber;
the top dead center of the high-pressure piston assembly is located above the first valve plate assembly, and the top dead center of the motion of the low-pressure piston assembly is located below the first valve plate assembly.

Further, the oil-free air compressor comprises an intercooler valve plate and a cylinder head; the combination of the intercooler valve plate and the cylinder head covers the cylinder body, and the intercooler valve plate is located between the cylinder head and the cylinder body;
the cylinder head and the intercooler valve plate jointly define a secondary exhaust chamber; the intercooler valve plate is provided with a second check valve body, which may allow unidirectional flow from the high-pressure chamber to the secondary exhaust chamber;
the secondary exhaust chamber is further provided with a noise reduction rib, which extends along the axial direction of the primary compression chamber; one end of the noise reduction rib is connected to the inner wall of the secondary exhaust chamber, and the other end is not in contact with any inner wall of the secondary exhaust chamber.

Further, the number of the noise reduction ribs is multiple, and the multiple noise reduction ribs are arranged parallel to each other at intervals.

Further, the oil-free air compressor comprises an intercooler, which is used to drive the external air of the oil-free air compressor to flow and form cooling air;
further comprising a first air blowing channel, which is used to deliver a portion of the cooling air;
a first air duct is provided inside the side wall of the cylinder body; the intercooler valve plate is provided with a second through hole; a second air duct is provided inside the cylinder head, and the second air duct forms a first air outlet on the surface of the cylinder head;
the first air duct, the second through hole, the second air duct and the first air outlet are respectively components of the first air blowing channel.

Further, the outer surface of the cylinder head is provided with a heat dissipation rib, and the first air outlet faces the heat dissipation rib.

Further, a second air blowing channel is provided; one end of the second air blowing channel is connected to the first air duct, and the other end intersects with the side wall of the cylinder head to form a second air outlet.

Further, the box body is provided with an opening;
further comprising a steel sleeve and a bearing; both the steel sleeve and the bearing are arranged inside the box body, and, the steel sleeve is located between the bearing and the box body along the radial direction of the bearing; the crankshaft assembly is rotatably connected to the steel sleeve through the bearing;
further comprising a connecting member and a foot pad; one end of the connecting member is connected to the steel sleeve, and the other end passes through the opening of the box body and is connected to the foot pad.

Further, the outer ring surface of the bearing is provided with a first engagement slot, and the steel sleeve is provided with a first engagement hole; further comprising an engagement member, one end of the engagement member is inserted into the first engagement hole, and the other end is engaged into the first engagement slot.

Further, the number of the openings, the number of the connecting members and the number of the foot pads are all the same.

A vehicle, which comprises the aforementioned oil-free air compressor.

Compared with the prior art, the advantages of the present invention are:
1. In the present invention, the sum of the axial length of the primary compression chamber and the axial length of the primary exhaust chamber is less than the axial length of the high-pressure chamber, thereby making the axial length of the primary compression chamber (low-pressure chamber) in the present invention smaller than the axial length of the low-pressure chamber in the prior art. In the present invention, the top dead center of the high-pressure piston assembly is located above the first valve plate assembly, and the top dead center of the motion of the low-pressure piston assembly is located below the first valve plate assembly, thereby making the axial length of the low-pressure piston connecting rod assembly in the present invention smaller than that of the low-pressure piston connecting rod assembly in the prior art, to match the primary compression chamber in the present invention which has a smaller axial length compared to the prior art. In the present invention, the maximum axial stroke of the low-pressure piston assembly is the axial length of the primary compression chamber. Compared with the prior art, the present invention shortens the stroke of the low-pressure piston assembly inside the primary compression chamber by reducing the axial length of the primary compression chamber (low-pressure chamber) and the axial length of the low-pressure piston connecting rod assembly. Therefore, the present invention solves the technical problem existing in the prior art: how to shorten the axial stroke of the low-pressure piston assembly.

### Description of Drawings

Figure 1 is a structural schematic view of the cylinder body in Example 1;
Figure 2 is a structural schematic view of the first check valve body in Figure 1;
Figure 3 is a structural sectional view of the oil-free air compressor in Example 1;
Figure 4 is a structural schematic view of the cylinder body from another perspective;
Figure 5 is a structural schematic view of the intercooler valve plate of the present invention;
Figure 6 is a partial sectional view of the cylinder end of the present invention;
Figure 7 is a schematic view of the back side of the cylinder head of the present invention;
Figure 8 is a structural schematic view of the steel sleeve of the present invention;
Figure 9 is a structural schematic view of the bearing of the present invention.

Label in the drawings: cylinder body (1), first valve plate assembly (3), first unidirectional channel (301), primary compression chamber (4), primary exhaust chamber (5), first check valve body (6), fixed shaft (601), elastic sheet (602), low-pressure piston assembly (7), high-pressure chamber (8), high-pressure piston assembly (9), intercooler valve plate (10), cylinder head (11), secondary exhaust chamber (12), second check valve body (13), noise reduction rib (14), intercooler (15), first air duct (16), second through hole (17), second air duct (18), first air outlet (19), heat dissipation rib (20), second air blowing channel (22), crankshaft assembly (23), high-pressure connecting rod (24), low-pressure connecting rod (25), box body (26), opening (27), steel sleeve (28), bearing (29), connecting member (30), foot pad (31), first gas port (32), second gas port (33), first engagement slot (34), engagement member (35), heat conduction rib (36), primary intake valve sheet (37), motor (38), plum blossom elastic coupling (39), flywheel (40), crankshaft (41), counterweight (42), first engagement hole (43), dust collection groove (44).

### DETAILED DESCRIPTIONS

The following describes the technical solution of the invention in further non-limiting detail by combining preferred embodiments and their accompanying drawings. In the description of the present invention, it should be understood that the directions or positional relationships indicated by terms such as "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial", "circumferential" are based on the directions or positional relationships shown in the drawings. Furthermore, terms "first", "second" are used for descriptive purposes only and cannot be understood as indicating or implying relative importance or implicitly specifying the quantity of the indicated technical feature. Thus, features defined with "first", "second" may explicitly or implicitly include at least one such feature. In the description of the present invention, "a plurality of" means at least two, such as two, three, etc., unless otherwise explicitly and specifically defined. The Examples described below with reference to the drawings are exemplary, intended to explain the present invention and should not be construed as limiting the present invention.

### Example 1

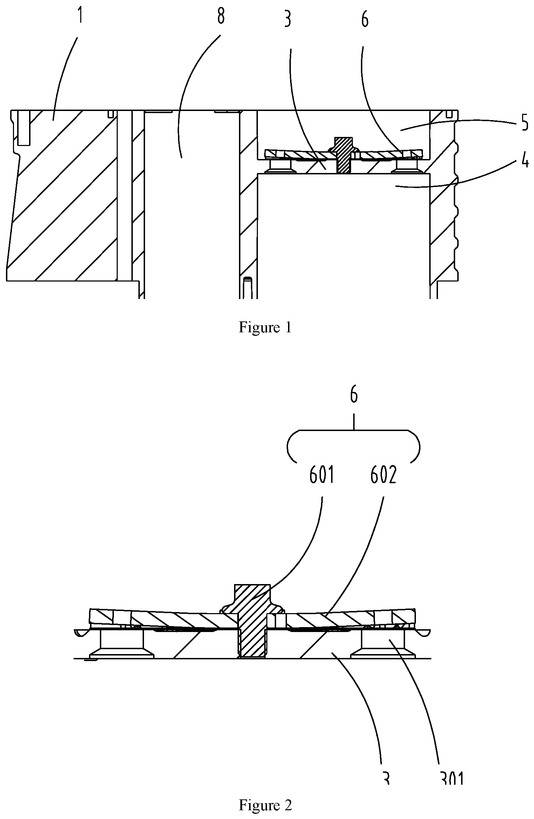

As shown in Figures 1 to 3, this Example proposes an oil-free air compressor, comprising a cylinder body (1), which is internally provided with a primary compression chamber (4), a primary exhaust chamber (5) and a high-pressure chamber (8); wherein the primary compression chamber (4) and the primary exhaust chamber (5) are coaxially arranged and are respectively parallel to the axis of the high-pressure chamber (8); the sum of the axial length of the primary compression chamber (4) and the axial length of the primary exhaust chamber (5) is less than the axial length of the high-pressure chamber (8); further comprising a first valve plate assembly (3), which is arranged between the primary compression chamber (4) and the primary exhaust chamber (5); the first valve plate assembly (3) is provided with a first check valve body (6), which is used to allow unidirectional flow from the primary compression chamber (4) to the primary exhaust chamber (5); further comprising a box body (26), which is located below the cylinder body (1) and is connected to the cylinder body (1); further comprising a crankshaft assembly (23), a low-pressure connecting rod (25) and a low-pressure piston assembly (7); the crankshaft assembly (23) is arranged inside the box body (26), and the primary compression chamber (4) is located between the primary exhaust chamber (5) and the crankshaft assembly (23); the low-pressure piston assembly (7) is movably arranged inside the primary compression chamber (4) and is connected to the crankshaft of the crankshaft assembly (23) through the low-pressure connecting rod (25); further comprising a high-pressure connecting rod (24) and a high-pressure piston assembly (9); the high-pressure piston assembly (9) is movably arranged inside the high-pressure chamber (8) and is connected to the crankshaft assembly (23) through the high-pressure connecting rod (24); the direction from the primary compression chamber (4) pointing to the primary exhaust chamber (5) is defined as upward, and the opposite direction is defined as downward, along the axial direction of the primary compression chamber (4) and the primary exhaust chamber (5); the top dead center of the high-pressure piston assembly (9) is located above the first valve plate assembly (3), and the top dead center of the motion of the low-pressure piston assembly (7) is located below the first valve plate assembly (3).

The cylinder body (1) is made of metal. The cylinder body (1) may be machined to form the primary compression chamber (4), the primary exhaust chamber (5) and the first valve plate assembly (3).

The first valve plate assembly (3) is provided with the first check valve body (6). The primary compression chamber (4) and the primary exhaust chamber (5) may be connected unidirectionally through the first check valve body (6). When gas flows, it flows unidirectionally from the primary compression chamber (4) to the primary exhaust chamber (5).

Combining Figures 1 to 3, specifically, the first valve plate assembly (3) is provided with a first unidirectional channel (301). One end of the first unidirectional channel (301) is connected to the primary compression chamber (4), and the other end is connected to the primary exhaust chamber (5). The first check valve body (6) comprises a fixed shaft (601) and an elastic sheet (602). The first unidirectional channel (301) corresponds to the edge of the elastic sheet (602) along the axial direction of the primary exhaust chamber (5). When gas is compressed inside the primary compression chamber (4) and the gas pressure reaches a certain value, the gas acts on the edge of the elastic sheet (602) through the first unidirectional channel (301), causing the edge of the elastic sheet (602) to lift away from the first valve plate assembly (3). The edge of the elastic sheet (602) does not block the first unidirectional channel (301), allowing the primary compression chamber (4) and the primary exhaust chamber (5) to be connected through the first unidirectional channel (301). In other situations, for example, when the gas pressure is insufficient to push the edge of the elastic sheet (602) to lift away from the first valve plate assembly (3), or when the low-pressure piston assembly (7) moves downward and a negative pressure is generated inside the primary compression chamber (4), the edge of the elastic sheet (602) swings towards the direction of the first valve plate assembly (3), and the edge of the elastic sheet (602) blocks the first unidirectional channel (301), cutting off the connection between the primary compression chamber (4) and the primary exhaust chamber (5).

The primary compression chamber (4) is also called the low-pressure chamber. The low-pressure piston assembly (7) is confined inside the primary compression chamber (4).

The high-pressure chamber (8) is also called the secondary compression chamber. The size and dimensions of the high-pressure chamber (8) are the same as those in the prior art. The processing method for the high-pressure chamber (8) has various options. For example, the high-pressure chamber (8) runs through the cylinder body (1) from top to bottom, forming a first port and a second port on the upper surface and lower surface of the cylinder body (1), respectively. The air that has been primarily compressed by the low-pressure piston assembly (7) in the primary compression chamber (4) continues to be delivered to the high-pressure chamber (8), i.e., the secondary compression chamber, to be secondarily compressed by the high-pressure piston assembly (9).

On the premise that the axial length of the high-pressure chamber (8) in this Example is equal to the axial length of the high-pressure chamber in the prior art, in the prior art, the axial length of the low-pressure chamber is consistent with the axial length of the high-pressure chamber; while in this Example, the sum of the axial length of the primary compression chamber (4) and the axial length of the primary exhaust chamber (5) is less than the axial length of the high-pressure chamber (8). Therefore, the axial length of the primary compression chamber (4), that is, the low-pressure chamber in this Example is smaller than the axial length of the high-pressure chamber (8). Thus, it may be deduced without any doubt that: the axial length of the primary compression chamber (4) (low-pressure chamber) in this Example is smaller than the axial length of the low-pressure chamber in the prior art.

The structures of the low-pressure piston assembly (7) and the high-pressure piston assembly (9) are the same as those in the prior art and will not be elaborated here.

In this Example, the combination of the low-pressure piston assembly (7) and the low-pressure connecting rod (25) is the low-pressure piston connecting rod assembly, and the combination of the high-pressure piston assembly (9) and the high-pressure connecting rod (24) was the high-pressure piston connecting rod assembly.

As mentioned above, this Example shortens the axial length of the primary compression chamber (4) (low-pressure chamber). If the low-pressure piston connecting rod assembly from the prior art were still used to connect to the crankshaft assembly, it would lead to insufficient axial space in the cylinder body. Therefore, in this Example, in order to match the primary compression chamber (4) which has a smaller axial length compared to the prior art, the axial length of the low-pressure piston connecting rod assembly is further shortened.

Specifically, this Example proposes that: the top dead center of the high-pressure piston assembly (9) is located above the first valve plate assembly (3), and the top dead center of the motion of the low-pressure piston assembly (7) is located below the first valve plate assembly (3). Both the high-pressure connecting rod (24) and the low-pressure connecting rod (25) are connected to the same crankshaft assembly (23), it can be concluded that:
On the premise that the axial length of the high-pressure piston connecting rod assembly in present invention is consistent with that of the high-pressure piston connecting rod assembly in the prior art; in the prior art, the axial length of the low-pressure piston connecting rod assembly is consistent with the axial length of the high-pressure piston connecting rod assembly. In this Example, since the top dead center of the high-pressure piston assembly (9) is located above the top dead center of the low-pressure piston assembly (7), that is, the top dead center of the high-pressure piston connecting rod assembly is located above the top dead center of the low-pressure piston connecting rod assembly, and since both the high-pressure piston connecting rod assembly and the low-pressure piston connecting rod assembly are connected to the same crankshaft assembly (23), therefore, the axial length of the low-pressure piston connecting rod assembly in this Example is smaller than that of the high-pressure piston connecting rod assembly. Thus, it can be deduced without any doubt that: the axial length of the low-pressure piston connecting rod assembly in this Example is smaller than that of the low-pressure piston connecting rod assembly in the prior art.

In summary, compared with the prior art, this Example not only shortens the axial length of the primary compression chamber (4) but also shortens the axial length of the low-pressure piston connecting rod assembly.

From the background technology, it is known that the technical problem existing in the prior art for this Example is how to shorten the axial stroke of the low-pressure piston assembly.

In this Example, the sum of the axial length of the primary compression chamber (4) and the axial length of the primary exhaust chamber (5) is less than the axial length of the high-pressure chamber (8), thereby making the axial length of the primary compression chamber (4) (low-pressure chamber) in this Example smaller than that of the low-pressure chamber in the prior art. In this Example, the top dead center of the high-pressure piston assembly (9) is located above the first valve plate assembly (3), and the top dead center of the motion of the low-pressure piston assembly (7) is located below the first valve plate assembly (3), thereby making the axial length of the low-pressure piston connecting rod assembly in this Example smaller than that of the low-pressure piston connecting rod assembly in the prior art, to match the primary compression chamber (4) in this Example which has a smaller axial length compared to the prior art. In this Example, the maximum axial stroke of the low-pressure piston assembly (7) is the axial length of the primary compression chamber (4). Compared with the prior art, this Example shortens the stroke of the low-pressure piston assembly (7) inside the primary compression chamber (4) by reducing the axial length of the primary compression chamber (4) (low-pressure chamber) and the axial length of the low-pressure piston connecting rod assembly. Therefore, this Example solves the technical problem existing in the prior art: how to shorten the axial stroke of the low-pressure piston assembly.

Furthermore, since this Example shortens the axial length of the primary compression chamber (4) (low-pressure chamber), under the condition that the diameter of the primary compression chamber (4) (low-pressure chamber) in this Example is consistent with the diameter of the low-pressure chamber in the prior art, the surface treatment area of the inner wall of the primary compression chamber (4) in this Example is smaller, saving processing costs.

Furthermore, in this Example, the low-pressure piston assembly (7) only moves within the primary compression chamber (4). The low-pressure piston assembly (7) has the characteristics of large diameter and heavy weight. Compared with the prior art, this Example has a lower top dead center for the motion of the low-pressure piston assembly (7), resulting in a lower center of gravity. Therefore, this leads to the oil-free air compressor using this Example having a lower center of gravity compared to the prior art. An oil-free air compressor with a lower center of gravity operates more stably.

The compressed air, abbreviated as compressed air, has significant energy due to being worked on multiple times. During the transmission process, the compressed air easily collides with the inner walls of the transmission channel, generating pulsation noise. Usually, the oil-free air compressor is arranged under the vehicle chassis, and the driver's cab is located above the oil-free air compressor. The pulsation noise from compressed air transmission will seriously affect the overall vehicle comfort and is difficult to meet the vehicle NVH requirements.

How to reduce the pulsation noise of compressed air is a technical problem that needs to be solved. This technical problem is solved by the following technical solution.

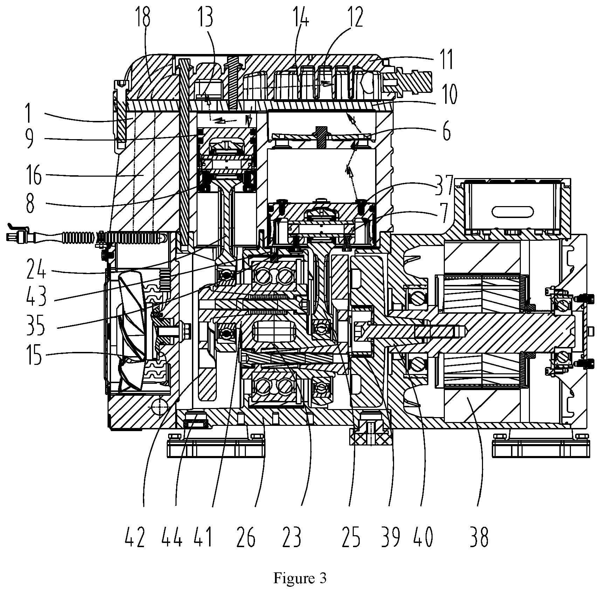

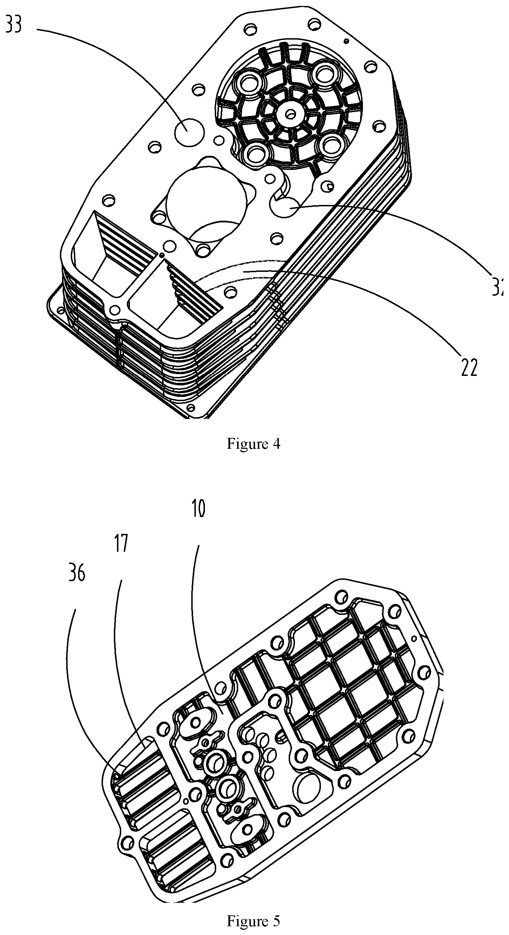

As shown in Figures 3 to 5, the oil-free air compressor of this Example further comprises an intercooler valve plate (10) and a cylinder head (11). The combination of the intercooler valve plate (10) and the cylinder head (11) covers the cylinder body (1), and the intercooler valve plate (10) is located between the cylinder head (11) and the cylinder body (1). The cylinder head (11) and the intercooler valve plate (10) jointly define a secondary exhaust chamber (12). The intercooler valve plate (10) is provided with a second check valve body (13), which may allow unidirectional flow from the high-pressure chamber (8) to the secondary exhaust chamber (12). The secondary exhaust chamber (12) is further provided with a noise reduction rib (14). The noise reduction rib (14) extends along the axial direction of the primary compression chamber (4). One end of the noise reduction rib (14) is connected to the inner wall of the secondary exhaust chamber (12), and the other end is not in contact with any inner wall of the secondary exhaust chamber (12).

The noise reduction rib (14) may be made of metal or other materials. Preferably, in this Example, the material of the noise reduction rib (14) is consistent with that of the cylinder head (11). The noise reduction rib (14) may be processed by machining, turning, or integrated casting. Preferably, the number of the noise reduction ribs (14) is multiple, and the multiple noise reduction ribs (14) are arranged parallel to each other at intervals.

The structure and principle of the second check valve body (13) are similar to those of the first check valve body (6) and will not be elaborated here. In this Example, gas flows unidirectionally in the order of primary compression chamber (4), primary exhaust chamber (5), high-pressure chamber (8), and secondary exhaust chamber (12).

The advantages of such solution are as follows:
Firstly, in this Example, due to the setting of the noise reduction ribs (14), during the process of compressed air passing through the secondary exhaust chamber (12), on one hand, the pulsation energy of the gas is absorbed by the noise reduction ribs (14) and conducted to the cylinder head (11); on the other hand, the pulsation energy of the gas is blocked and attenuated by the noise reduction ribs (14). This Example reduces the pulsation energy of the gas by setting the noise reduction ribs (14), thereby reducing the pulsation noise of the gas.

Secondly, in the prior art, the cylinder head needed to accommodate the spaces for both the primary exhaust chamber and the secondary exhaust chamber. In this Example, the primary exhaust chamber originally arranged in the cylinder head in the prior art is arranged in the cylinder body (1). It can be understood that, in this Example, the cylinder head (11) only needs to accommodate one chamber, that is, the secondary exhaust chamber (12). Therefore, this Example allows the secondary exhaust chamber (12) to occupy the internal space of the cylinder head (11) as much as possible, making the secondary exhaust chamber (12) in this Example larger in volume than the secondary exhaust chamber in the prior art. Furthermore, the noise reduction ribs (14) may be made relatively thin, making the cavity volume of the secondary exhaust chamber (12) larger. If the volume of the secondary exhaust chamber (12) in this Example is larger than that in the prior art, the gas with pulsation energy occupies a smaller proportion of the volume when entering the secondary exhaust chamber (12), resulting in smaller airflow fluctuations inside the secondary exhaust chamber (12), which further helps to reduce gas pulsation noise.

Thirdly, in this Example, the primary compression chamber (4), the primary exhaust chamber (5) and the secondary exhaust chamber (12) are arranged in a gradient from bottom to top, making the structure compact and rationally utilizing space. In addition, it may also serve the function of reducing mechanical noise. Specifically, the operating noise of the crankshaft assembly (23) inside the air compressor is mechanical noise. During the upward transmission of mechanical noise from bottom to top, it sequentially passes through the three chambers: the primary compression chamber (4), the primary exhaust chamber (5) and the secondary exhaust chamber (12), which are filled with air. This has a function of attenuating and reducing noise. The principle is: 1. air is a good sound-absorbing material that may absorb part of the noise energy, and when noise passes through the air to the chamber, the air damping effect between air molecules may gradually weaken the noise energy; 2. when noise is transmitted into the chamber, part of the noise may be absorbed by the wall material of the chamber, and the remaining noise may cause air vibration inside the chamber. This vibration may collide with the inner walls of the chamber and be blocked by them, thereby weakening the noise. Therefore, this Example may also reduce mechanical noise from bottom to top.

Fourthly, oil-free air compressors are usually arranged under the vehicle chassis, below the driver's cab. This Example reduces the gas pulsation noise and mechanical noise of the oil-free air compressor, further improving the comfort of the driver.

Further, the low-pressure piston assembly (7) has a primary intake valve sheet (37). The structure and setting method of the primary intake valve sheet (37) are both prior art. See the content disclosed in patent document CN201822042980.8.

Further, the oil-free air compressor of this Example further comprises a motor (38), a crankshaft assembly (23), a plum blossom elastic coupling (39) and a flywheel (40). The crankshaft assembly (23) comprises a crankshaft (41) and two counterweights (42). The crankshaft (41) is a two-piece combined and opposed structure. The two counterweights (42) are respectively arranged on both sides of the crankshaft (41). The motor (38) is arranged on one side of the crankshaft assembly (23). The counterweight (42) facing the motor (38) is connected to the main shaft of the motor (38) through the plum blossom elastic coupling (39) and the flywheel (40). Further, the high-pressure piston assembly (9) is connected to the crankshaft (41) through the high-pressure connecting rod (24), and the low-pressure piston assembly (7) is connected to the crankshaft (41) through the low-pressure connecting rod (25).

Further, as shown in Figure 3, the oil-free air compressor further comprises an intercooler (15). The intercooler (15) comprises an intercooling channel and a fan for cooling the intercooling channel. The intercooling channel is used to deliver compressed air, and the two ends of the intercooling channel are a cooling inlet and a cooling outlet, respectively. The rotation of the fan drives the surrounding external air of the air compressor to form cooling air, which is used to cool the intercooling channel.

As shown in Figures 3 to 4, the cylinder body (1) of the oil-free air compressor in this Example is internally provided with a first connection channel and a second connection channel. One end of the first connection channel is connected to the cooling inlet of the intercooling channel, and the other end intersects with the upper surface of the cylinder body (1) to form a first gas port (32). One end of the second connection channel is connected to the cooling outlet of the intercooling channel, and the other end intersects with the upper surface of the cylinder body (1) to form a second gas port (33).

During use, the motor (38) provides the power source, and drives the crankshaft (41) to rotate through the flywheel (40) and the plum blossom elastic coupling (39), thereby achieving alternating reciprocal motion of the low-pressure piston assembly (7) and the high-pressure piston assembly (9), causing a periodic change in the volume of the primary compression chamber (4) and the high-pressure chamber (8) (secondary compression chamber) to achieve the purpose of compressing air.

When the low-pressure piston assembly (7) moves from top dead center to bottom dead center, a negative pressure is generated in the primary compression chamber (4), and gas is sucked into the primary compression chamber (4) through the primary intake valve sheet (37) of the low-pressure piston assembly (7). When the low-pressure piston assembly (7) moves from bottom dead center to top dead center, the gas in the primary compression chamber (4) is squeezed, the gas pressure increases, and the gas enters the primary exhaust chamber (5) through the first check valve body (6). At this point, the primary compression of the gas is completed. The gas at this time has lower pressure and higher temperature. Then, the gas passes through the first gas port (32), passes through the first connection channel, enters the intercooling channel and is cooled by the fan, and then is delivered to the second gas port (33) through the second connection channel.

Subsequently, when the high-pressure piston assembly (9) moves from top dead center to bottom dead center, a negative pressure is generated in the high-pressure chamber (8) (secondary compression chamber), and gas is sucked into the high-pressure chamber (8); when the high-pressure piston assembly (9) moves from bottom dead center to top dead center, the gas in the high-pressure chamber (8) is squeezed again, the gas pressure increases, and the gas enters the secondary exhaust chamber (12) through the second check valve body (13). At this point, the secondary compression of the gas is completed. As the pistons move reciprocally, the above process repeats, and gas is continuously compressed and discharged.

The combination of the cylinder body (1), the intercooler valve plate (10) and the cylinder head (11) forms the cylinder end. From the previous content, it is known that high-temperature compressed air may flow inside the cylinder end. How to cool the cylinder end is a technical problem that needs to be solved. This technical problem is solved by the following technical solution.

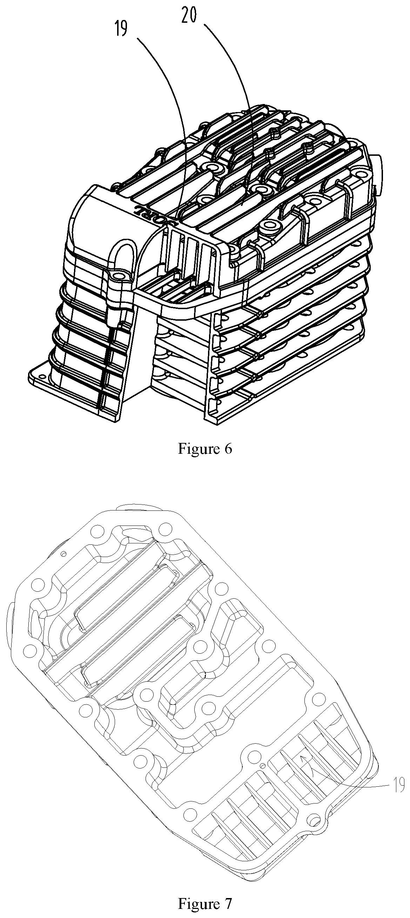

As shown in Figures 3 to 7, the oil-free air compressor of this Example further comprises a first air blowing channel, which is used to deliver a portion of the cooling air driven by the fan of the intercooler (15). A first air duct (16) is provided within the side wall of the cylinder body (1). The intercooler valve plate (10) is provided with a second through hole (17). A second air duct (18) is provided inside the cylinder head (11), and the second air duct (18) forms a first air outlet (19) on the surface of the cylinder head (11). The first air duct (16), the second through hole (17), the second air duct (18) and the first air outlet (19) are respectively components of the first air blowing channel.

During use, a portion of the cooling air driven by the fan of the intercooler (15) passes through the first air duct (16), the second through hole (17) and the second air duct (18) in sequence, and finally blows out from the first air outlet (19). The cooling air in the first air blowing channel carries away the heat within the channel during flow, including the heat from the inner wall of the first air duct (16) arranged in the cylinder body (1), the heat from the inner wall of the second through hole (17) arranged in the intercooler valve plate (10), and the heat from the inner wall of the second air duct (18) arranged in the cylinder head (11). This achieves the purpose of cooling the cylinder body (1), the intercooler valve plate (10) and the cylinder head (11) respectively, that is, cooling the cylinder end.

Preferably, several heat conduction ribs (36) are arranged inside the second through hole (17). The several heat conduction ribs (36) are arranged at intervals and are respectively connected to the hole wall of the second through hole (17). The purpose is to increase the contact area between the intercooler valve plate (10) and the cooling air, making the heat exchange efficiency between the intercooler valve plate (10) and the cooling air higher.

Further preferably, the outer surface of the cylinder head (11) is provided with heat dissipation ribs (20), and the first air outlet (19) faces the heat dissipation ribs (20). The cooling air blowing out from the first air outlet (19) continues to sweep towards the heat dissipation ribs (20) on the outer surface of the cylinder head (11), thereby carrying away the heat of the cylinder head (11) through the heat dissipation ribs (20). The setting of the heat dissipation ribs (20) increases the heat exchange efficiency between the cooling air and the cylinder head (11), serving the purpose of further cooling the surface of the cylinder head (11).

Further, as shown in Figures 3 to 4, the oil-free air compressor of this Example is further provided with a second air blowing channel (22). One end of the second air blowing channel (22) is connected to the first air duct (16), and the other end intersects with the side wall of the cylinder head (11) to form a second air outlet.

In this Example, a portion of the cooling air is diverted from the first air duct (16), and blows out from the second air outlet on the side wall of the cylinder head (11) through the second air blowing channel (22), to achieve the purpose of cooling the side wall of the cylinder head (11).

Further, in the prior art, the crankshaft assembly is directly connected to the air compressor box body through bearings. The downward force generated by the combined weight of the crankshaft assembly, the low-pressure piston assembly and the high-pressure piston assembly, as well as the torque from the motion of the high and low-pressure piston assemblies, are all transmitted to the air compressor box body. Usually, in order to meet the requirements of lightweighting for the entire machine, the air compressor box body is made of aluminum material. This leads to the deformation or fracture of the air compressor housing under the long-term action of the aforementioned forces and torques during long-term use. Therefore, in order to extend the service life of the air compressor housing, this Example further includes the following technical solution.

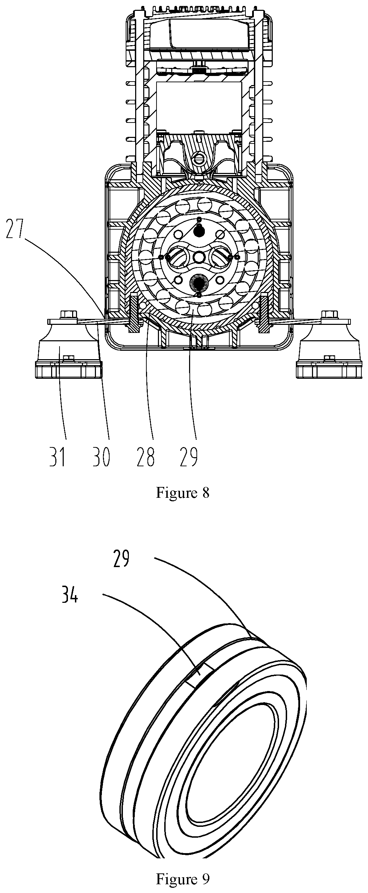

As shown in Figures 3 and 8, the box body (26) is provided with openings (27); further comprises a steel sleeve (28) and a bearing (29). Both the steel sleeve (28) and the bearing (29) are arranged inside the box body (26), and, the steel sleeve (28) is located between the bearing (29) and the box body (26) along the radial direction of the bearing (29); the crankshaft assembly (23) is rotatably connected to the steel sleeve (28) through the bearing (29); further comprises a connecting member (30) and a foot pad (31), one end of the connecting member (30) is connected to the steel sleeve (28), and the other end passes through the opening (27) of the box body (26) and is connected to the foot pad (31).

The number of the openings (27), the number of the connecting members (30) and the number of the foot pads (31) are all the same. That is, the number of the openings (27) matches the number of the connecting members (30) and the foot pads (31), respectively. For example, in this Example, the box body (26) is provided with two openings (27) on both side, and the number of the connecting members (30) and the foot pads (31) is also two, respectively. One end of one connecting member (30) passes through one opening (27) and is connected to one foot pad (31), and the other connecting member (30) passes through the other opening (27) and is connected to the other foot pad (31).

The connecting member (30) may be a plate structure made of metal.

In this Example, the crankshaft assembly (23) is connected to the steel sleeve (28) through the bearing (29), and the steel sleeve (28) is connected to the foot pad (31) through the connecting member (30), thereby transferring the downward force generated by the combined weight of the crankshaft assembly (23), the low-pressure piston assembly (7) and the high-pressure piston assembly (9), as well as the torque from the motion of the low-pressure piston assembly (7) and the high-pressure piston assembly (9), to the foot pad (31) through the bearing (29), the steel sleeve (28) and the connecting member (30), so as to divert most of the force and torque originally acting on the air compressor box body (26), reduce the force and torque acting on the air compressor box body (26), and effectively extends the service life of the box body (26) of the air compressor.

Further, in the prior art, the crankshaft assembly is directly connected to the box body through bearings. During the operation of the air compressor, due to mechanical friction and the work done by compressing gas, a large amount of heat may be generated inside the box body, raising the temperature of the box body. However, the box body is made of aluminum material, the crankshaft assembly, bearings, and the like are made of steel. The thermal expansion coefficient of aluminum is greater than that of steel. This leads to, the expansion deformation degree of the box body is different from that of the crankshaft assembly and the bearing along the direction from top to bottom in Figure 3, i.e., one radial direction of the bearing when heated. The expansion deformation of the box body is greater, causing the gap between the box body and the bearing to increase, resulting in the bearing moving downward and the crankshaft assembly connected to the bearing moving downward.

In this Example, a steel sleeve (28) made of steel is arranged between the bearing (29) and the box body (26), that is, the outer ring of the bearing (29) is fixed to the steel sleeve (28), and the material of the steel sleeve (28) is consistent with that of the crankshaft assembly (23) and the bearing (29). A large amount of heat may be generated inside the box body (26), and during the process of increasing the temperature of the box body, the thermal expansion deformation degree and amount of the bearing (29) and the steel sleeve (28) are consistent along the direction from top to bottom in Figure 3, i.e., one radial direction of the bearing (29). No gap is generated between the outer ring of the bearing (29) and the steel sleeve (28), thereby avoiding the situation of the bearing (29) moving downward and the crankshaft assembly (23) connected to the bearing (29) moving downward.

Further, as shown in Figures 3 and 9, in this Example, the outer ring surface of the bearing (29) is provided with a first engagement slot (34), the steel sleeve (28) is provided with a first engagement hole (43); further comprises an engagement member (35). One end of the engagement member (35) is inserted into the first engagement hole (43), and the other end is engaged into the first engagement slot (34).

The engagement member (35) may be selected from structures such as a screw, a bolt, a pin, or a threaded locking pin. Preferably, in order to increase the connection strength between the engagement member (35) and the first engagement hole (43), the engagement member (35) is a threaded locking pin. The outer surface has first external threads, and the hole wall of the first engagement hole (43) is machined with first internal threads. The engagement member (35) (i.e., the threaded locking pin) is connected to the first engagement hole (43) by threaded engagement.

During startup and shutdown of the air compressor, the vibration impact from the motor is significant. This vibration easily causes a circumferential misalignment between the outer ring of the bearing (29) and the inner ring of the steel sleeve (28). Such misalignment is also called the slipping creep phenomenon of the bearing (29) relative to the steel sleeve (28). Over time, it may easily lead to the outer ring of the bearing (29) being worn by the inner ring of the steel sleeve (28).

In this Example, through the engagement of the engagement member (35) and the first engagement hole (43), the outer ring of the bearing (29) and the inner ring of the steel sleeve (28) are fixed together. Since the outer ring of the bearing (29) and the inner ring of the steel sleeve (28) are relatively fixed, it avoids the phenomenon of circumferential misalignment between the outer ring of the bearing (29) and the inner ring of the steel sleeve (28) caused by the startup and shutdown of the air compressor. This further avoids the aforementioned slipping creep phenomenon of the bearing (29) relative to the steel sleeve (28), and also avoids the situation of the outer ring of the bearing (29) being worn by the inner ring of the steel sleeve (28).

Further, as shown in Figure 3, the inner wall of the box body (26) of the air compressor in this Example is further machined with a dust collection groove (44). The opening of the dust collection groove (44) faces the crankshaft assembly (23). The dust collection groove (44) is used to collect debris falling from the power parts inside the box body (26) of the air compressor, such as debris falling from the surface of the crankshaft (41) due to friction between the crankshaft (41) and the bearing connected to it, debris falling from the outer surface of the high-pressure piston assembly (9) due to friction with the inner wall of the high-pressure chamber (8), and debris falling from the outer surface of the low-pressure piston assembly (7) due to friction with the inner wall of the primary compression chamber (4), etc.

### Example 2

This Example provides a vehicle, which comprises the oil-free air compressor of Example 1.

The above Examples only express several implementation modes of the present invention, and their description is relatively specific and detailed, but should not be construed as limiting the patent scope of the present invention. It should be pointed out that for those of ordinary skill in the art, several modifications and improvements may be made without departing from the concept of the present invention, and these all belong to the protection scope of the present invention. Therefore, the protection scope of the patent of the present invention should be based on the appended claims.

## Claims

1. An oil-free air compressor, **characterized in that**, comprising a cylinder body (1), the cylinder body is internally provided with a primary compression chamber (4), a primary exhaust chamber (5) and a high-pressure chamber (8);
wherein the primary compression chamber (4) and the primary exhaust chamber (5) are coaxially arranged and are respectively parallel to the axis of the high-pressure chamber (8); the sum of the axial length of the primary compression chamber (4) and the axial length of the primary exhaust chamber (5) is less than the axial length of the high-pressure chamber (8);
further comprising a first valve plate assembly (3), the first valve plate assembly is arranged between the primary compression chamber (4) and the primary exhaust chamber (5); the first valve plate assembly (3) is provided with a first check valve body (6), the first check valve is used to allow unidirectional flow from the primary compression chamber (4) to the primary exhaust chamber (5);
further comprising a box body (26), the box body is located below the cylinder body (1) and is connected to the cylinder body (1);
further comprising a crankshaft assembly (23), a low-pressure connecting rod (25) and a low-pressure piston assembly (7); the crankshaft assembly (23) is arranged inside the box body (26), and the primary compression chamber (4) is located between the primary exhaust chamber (5) and the crankshaft assembly (23); the low-pressure piston assembly (7) is movably arranged inside the primary compression chamber (4) and is connected to the crankshaft assembly (23) through the low-pressure connecting rod (25);
further comprising a high-pressure connecting rod (24) and a high-pressure piston assembly (9); the high-pressure piston assembly (9) is movably arranged inside the high-pressure chamber (8) and is connected to the crankshaft assembly (23) through the high-pressure connecting rod (24);
the direction from the primary compression chamber (4) pointing to the primary exhaust chamber (5) is defined as upward, and the opposite direction is defined as downward, along the axial direction of the primary compression chamber (4) and the primary exhaust chamber (5);
the top dead center of the high-pressure piston assembly (9) is located above the first valve plate assembly (3), and the top dead center of the motion of the low-pressure piston assembly (7) is located below the first valve plate assembly (3).

2. The oil-free air compressor according to claim 1, **characterized in that**, further comprising an intercooler valve plate (10) and a cylinder head (11); the combination of the intercooler valve plate (10) and the cylinder head (11) covers the cylinder body (1), and the intercooler valve plate (10) is located between the cylinder head (11) and the cylinder body (1);
the cylinder head (11) and the intercooler valve plate (10) jointly define a secondary exhaust chamber (12); the intercooler valve plate (10) is provided with a second check valve body (13), the second check valve body may allow unidirectional flow from the high-pressure chamber (8) to the secondary exhaust chamber (12);
the secondary exhaust chamber (12) is provided with a noise reduction rib (14), the noise reduction rib extends along the axial direction of the primary compression chamber (4); one end of the noise reduction rib (14) is connected to the inner wall of the secondary exhaust chamber (12), and the other end is not in contact with any inner wall of the secondary exhaust chamber (12).

3. The oil-free air compressor according to claim 2, **characterized in that**, the number of the noise reduction ribs (14) is multiple, and the multiple noise reduction ribs (14) are arranged parallel to each other at intervals.

4. The oil-free air compressor according to claim 2, **characterized in that**, further comprising an intercooler (15), the intercooler is used to drive the external air of the oil-free air compressor to flow and form cooling air;
further comprising a first air blowing channel, the first air blowing channel is used to deliver a portion of the cooling air;
a first air duct (16) is provided within the side wall of the cylinder body (1); the intercooler valve plate (10) is provided with a second through hole (17); a second air duct (18) is provided within the cylinder head (11), and the second air duct (18) forms a first air outlet (19) on the surface of the cylinder head (11);
the first air duct (16), the second through hole (17), the second air duct (18) and the first air outlet (19) are respectively components of the first air blowing channel.

5. The oil-free air compressor according to claim 4, **characterized in that**, the outer surface of the cylinder head (11) is provided with a heat dissipation rib (20), and the first air outlet (19) faces the heat dissipation rib (20).

6. The oil-free air compressor according to claim 4, **characterized in that**, further providing a second air blowing channel (22); one end of the second air blowing channel (22) is connected to the first air duct (16), and the other end intersects with the side wall of the cylinder head (11) to form a second air outlet.

7. The oil-free air compressor according to claim 1, **characterized in that**, the box body (26) is provided with an opening (27);
further comprising a steel sleeve (28) and a bearing (29); both the steel sleeve (28) and the bearing (29) are arranged inside the box body (26), and, the steel sleeve (28) is located between the bearing (29) and the box body (26) along the radial direction of the bearing (29); the crankshaft assembly (23) is rotatably connected to the steel sleeve (28) through the bearing (29);
further comprising a connecting member (30) and a foot pad (31); one end of the connecting member (30) is connected to the steel sleeve (28), and the other end passes through the opening (27) of the box body (26) and is connected to the foot pad (31).

8. The oil-free air compressor according to claim 7, **characterized in that**, the outer ring surface of the bearing (29) is provided with a first engagement slot (34), the steel sleeve (28) is provided with a first engagement hole (43); further comprising an engagement member (35), one end of the engagement member (35) is inserted into the first engagement hole (43), and the other end is engaged into the first engagement slot (34).

9. The oil-free air compressor according to claim 7, **characterized in that**, the number of the openings (27), the number of the connecting members (30) and the number of the foot pads (31) are all the same.

10. A vehicle, **characterized in that**, comprising the oil-free air compressor according to any one of claims 1 to 9.
